# EUROPÄISCHE PATENTSCHRIFT

(11) **EP 1 758 750 B1**
(45) Veröffentlichungstag und Bekanntmachung des Hinweises auf die Patenterteilung: **23.07.2008**
(21) Anmeldenummer: 05747421.5
(22) Anmeldetag: 30.04.2005
(51) Int. Cl.: B60J 7/14

(54) **CABRIOLET-FAHRZEUG**
CONVERTIBLE VEHICLE
VEHICULE CABRIOLET

(30) Priorität: 03.05.2004 DE 102004021577
(43) Veröffentlichungstag der Anmeldung: 07.03.2007
(73) Patentinhaber: Wilhelm Karmann GmbH, 49084 Osnabrück (DE)
(72) Erfinder: BROCKHOFF, Franz-Ulrich, 49565 Bramsche (DE)
(86) Internationale Anmeldenummer: PCT/DE2005/000805
(87) Internationale Veröffentlichungsnummer: WO 2005/105497

(56) Entgegenhaltungen:
- DE-C1- 19 706 397
- US-B1- 6 585 310
- PATENT ABSTRACTS OF JAPAN Bd. 013, Nr. 334 (M-855), 27. Juli 1989 (1989-07-27) -& JP 01 111525 A (AISIN SEIKI CO LTD), 28. April 1989 (1989-04-28)

## Beschreibung

Die Erfindung betrifft ein Cabriolet-Fahrzeug mit zumindest zwei Dachteilen nach dem Oberbegriff des Anspruchs 1 sowie ein zugehöriges Fahrzeugdach.

Es sind Cabriolet-Fahrzeuge bekannt (JP01111525A, US6585310), die zwei im geschlossenen Zustand aufeinander folgende Dachteile aufweisen, von denen ein hinteres gegenüber der Karosserie um eine Querachse derart abwärts verlagerbar ist, daß es in abgelegter Stellung im wesentlichen horizontal liegt und mit der bei geschlossenem Dach dem Insassenraum zugewandten Seite nach oben zeigt. Das vordere Dachteil ist beim Öffnen um eine im Grenzbereich zwischen den Dachteilen gelegene zweite Querachse an dieses heranschwenkbar und liegt in geöffneter Stellung gegensinnig zu diesem orientiert. Um die Öffnungs- und Schließbewegung auch auf das vordere Dachteil zu vermitteln, sind pro Fahrzeugseite zwei seitliche Gestängeteile vorgesehen, die sich jeweils von einem Hauptlager in der Karosserie bis in den Verbindungsbereich des hinteren und des vorderen Dachteils erstrekken und bei der Dachbewegung nach Art eines Parallelogramms öffnen und schließen. Die Gestängeteile werden häufig auch als Führungs- und Hauptführungsstange bezeichnet. Durch ihr Öffnen und Schließen gegeneinander sind diese Teile bei der Öffnung störend im Blickfeld, und es besteht Einklemmgefahr zwischen sich schließenden Stangen. Zudem muß ein erheblicher Aufwand an Verkleidungen im hinteren Dachteil vorgesehen sein, um zumindest bei geschlossenem Dach zu vermeiden, daß die vordere der beiden Stangen sichtbar ist.

Der Erfindung liegt das Problem zugrunde, hier eine Verbesserung zu erreichen.

Die Erfindung löst dieses Problem durch ein Cabriolet-Fahrzeug mit den Merkmalen des Anspruchs 1 sowie durch ein bewegliches Fahrzeugdach mit den Merkmalen des Anspruchs 12. Hinsichtlich vorteilhafter Ausgestaltungen der Erfindung wird auf die weiteren Ansprüche 2 bis 11 verwiesen.

Erfindungsgemäß ist das in Fahrtrichtung vordere, auch als Hauptführungsstange bezeichnete Gestängeteil, entbehrlich. Damit ist sowohl die Optik verbessert als auch eine Klemmgefahr zwischen den sich schließenden Stangen vermieden. Die Einschwenkbewegung des vorderen Dachteils ist über die Welle(n) zwangsweise vermittelbar und bedarf keiner weiteren Antriebs- oder Steuerungsmittel, wodurch die Konstruktion einfach gehalten wird.

Vorteilhaft liegen die Wellen, die das Einschwenken des vorderen Dachteils gegenüber dem hinteren bewirken, parallel zur Erstreckungsebene des hinteren Dachteils, wodurch sie flach an dieses angepaßt sein können und nur wenig in Richtung des Insassenraums vorragen.

Wenn zur Übersetzung der Drehbewegung der Welle in die Heranschwenkbewegung zwischen den Dachteilen jeweils ein oberes räumliches Getriebe vorgesehen ist, ist eine zuverlässige und verkantungsfreie Kraftumlenkung ermöglicht. Ebenso kann auch im unteren Bereich zwischen der Verlagerungsbewegung des hinteren Dachteils und der Drehbewegung der Welle ein räumliches Getriebe vorgesehen sein. Ein konstruktiv einfaches oberes und/oder unteres räumliches Getriebe ist jeweils durch eine Ausbildung als sphärische Getriebe ermöglicht.

Besonders einfach und zuverlässig ist das obere und/oder das untere räumliche Getriebe jeweils als Kreuzgelenk ausgebildet.

Insbesondere ergibt sich eine zuverlässige und nur über Schwenkverbindungen ohne die Gefahr von Verkantungen arbeitende Kinematik, wenn das hintere Dachteil zu seiner Verlagerungsbewegung um eine quer zum Fahrzeug liegende erste Achse schwenkbar ist, das vorgeordnete Dachteil gegenüber dem hinteren Dachteil um eine parallel hierzu liegende zweite Achse schwenkbar ist und die vermittelnden Wellen beide Schwenkachsen koppeln.

Dann kann auch zur Bewegung des hinteren Dachteils um eine quer zum Fahrzeug liegende erste Achse, des vorgeordneten Dachteils um eine zweite Achse und zur Drehbewegung der Welle ein einziger Antrieb vorgesehen ist, der direkt zur Bewirkung der Bewegung des hinteren Dachteils um eine quer zum Fahrzeug liegende erste Achse dient und über die Wellen die weiteren Bewegungen zwangsweise bewirkt.

Insbesondere können die Wellen derart abgekröpft sein, daß sie nicht geradlinig über die gesamte Höhe des hinteren Dachteils erstreckt sind, sondern die Drehmomentübertragung im mittleren Bereich durch die C-Säulen selbst erfolgt und diese nur oben und unten Achsstummel aufweisen, die ihre Drehachse umfassen und die dann nicht den Insassenraum stören.

Die abgekröpften Antriebswellen ermöglichen auch eine breite Heckscheibe, deren lichte Weite durch diese Wellen nicht eingeengt ist.

Wenn somit die Wellen in Doppelfunktion auch als Drehachse für seitlich einer Heckscheibe liegende C-Säulen des hinteren Dachteils dienen, können diese während der Dachöffnung eingedreht werden und liegen bei geöffnetem Dach oberhalb der Heckscheibe, so daß das Maß des abgelegten Dachpakets nach unten nicht vergrößert ist. Da das vorgeordnete Dachteil ohnehin in abgelegter Stellung gegenläufig zum hinteren Dachteil orientiert und gewölbt ist, steht für die eingeschwenkten C-Säulen genug Raum zur Verfügung, ohne daß die Dicke des abgelegten Dachpakets zunehmen müßte. Insbesondere können die C-Säulen in den Hohlraum zwischen gegenläufig gewölbten Dachteilen einschwenkbar sein. Das Dachpaket ist deutlich schmaler gegenüber festen C-Säulen, so daß der Ablageraum des Daches verschmälert und die Randfuge eines Verdeckkastendeckels erheblich zur Fahrzeugmitte hin rücken kann, was die Designmöglichkeiten am Fahrzeug verbessert. Die Einschwenkbewegung der C-Säulen ist zudem über Drehachsen mit mechanisch geringem Aufwand möglich. Gleichzeitig ist das Paket der abgelegten Dachteile auch flacher, wodurch auch das Fahrzeugheck in optisch angenehmerem, flacherem Design ausgeführt sein kann.

Weitere Vorteile und Merkmale der Erfindung ergeben sich aus in der Zeichnung schematisch dargestellten und nachfolgend beschriebenen Ausführungsbeispielen des Gegenstandes der Erfindung.

In der Zeichnung zeigt:

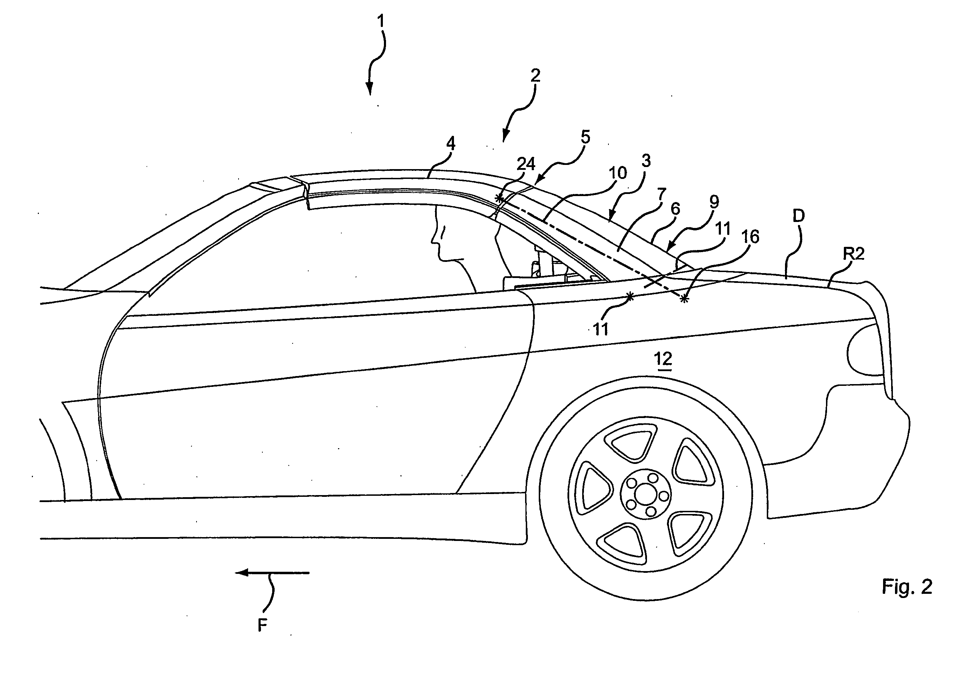

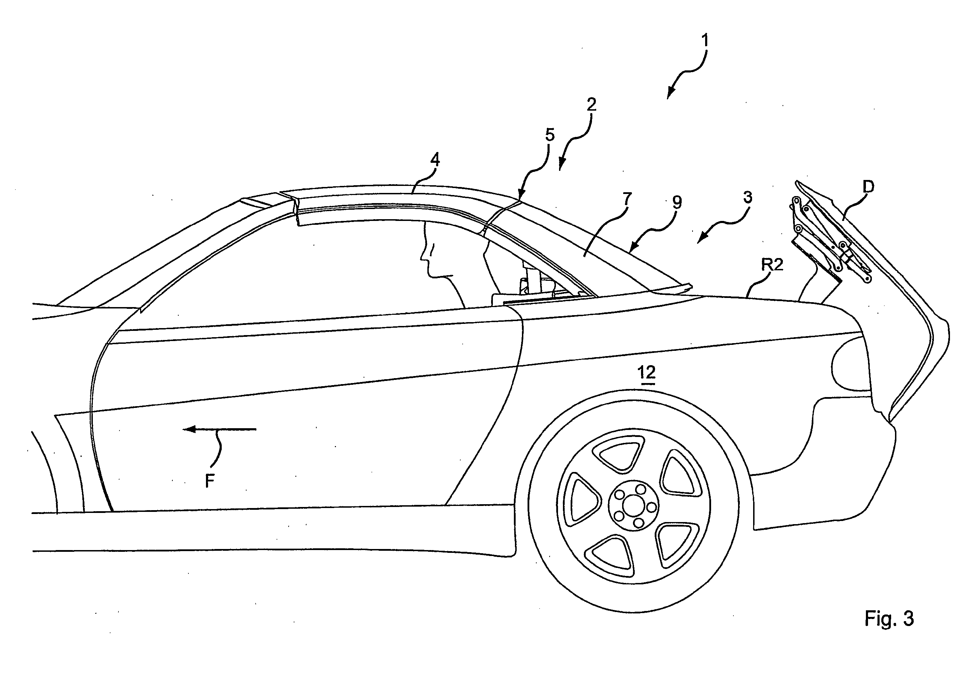

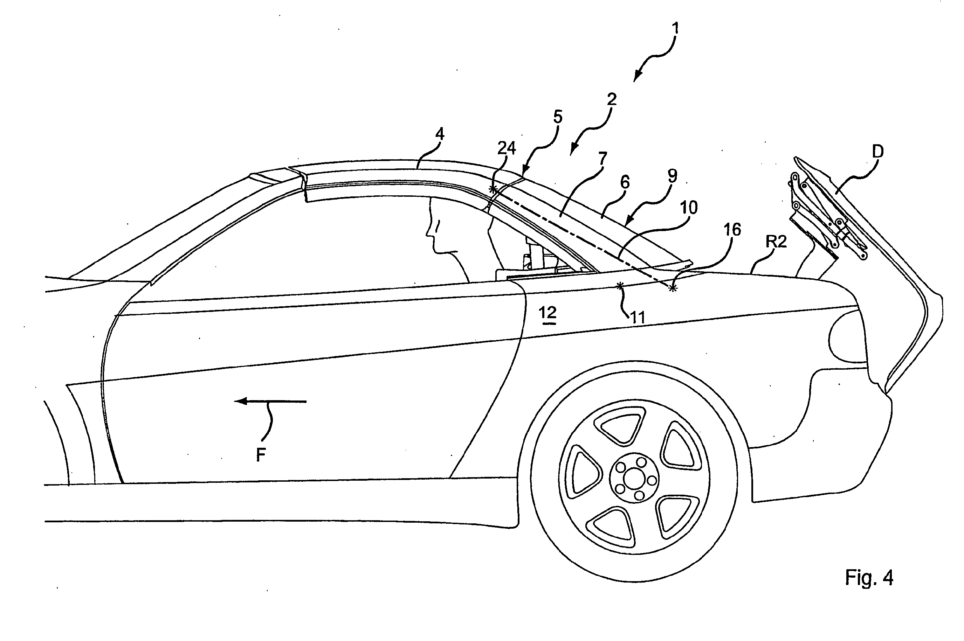

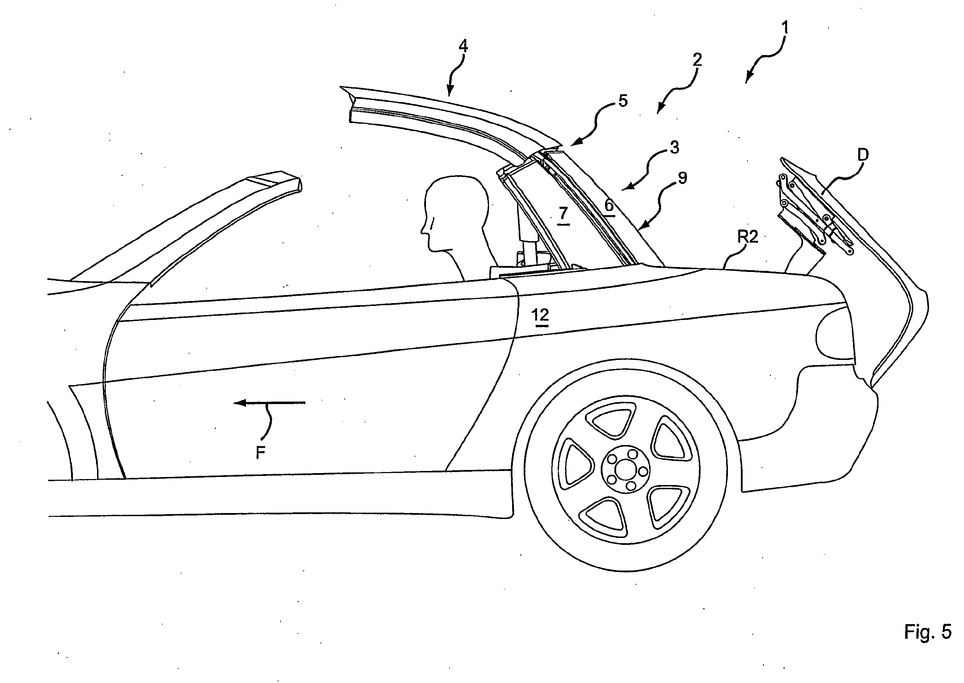

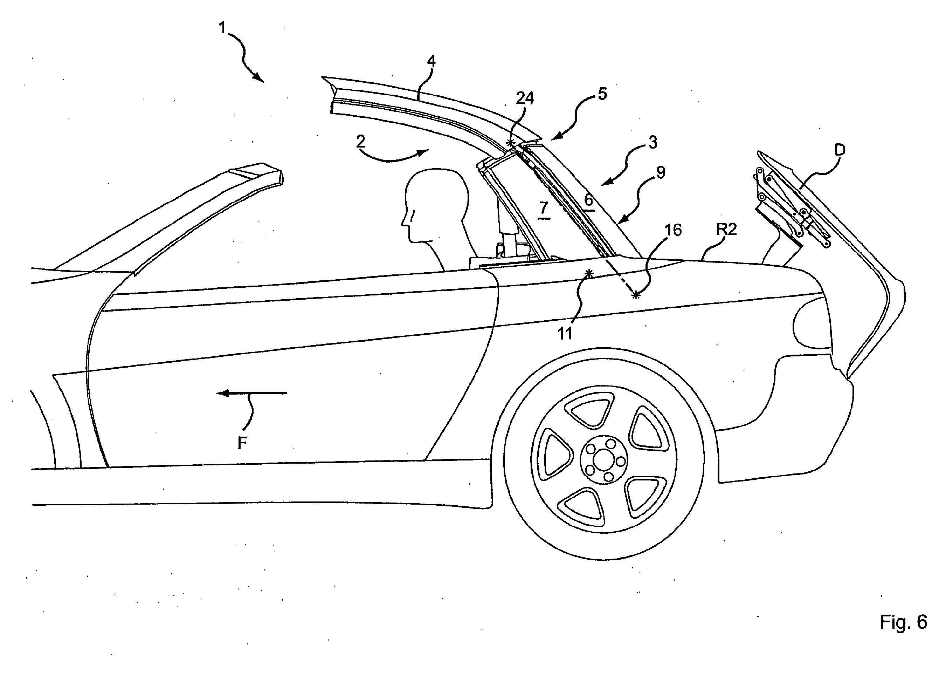

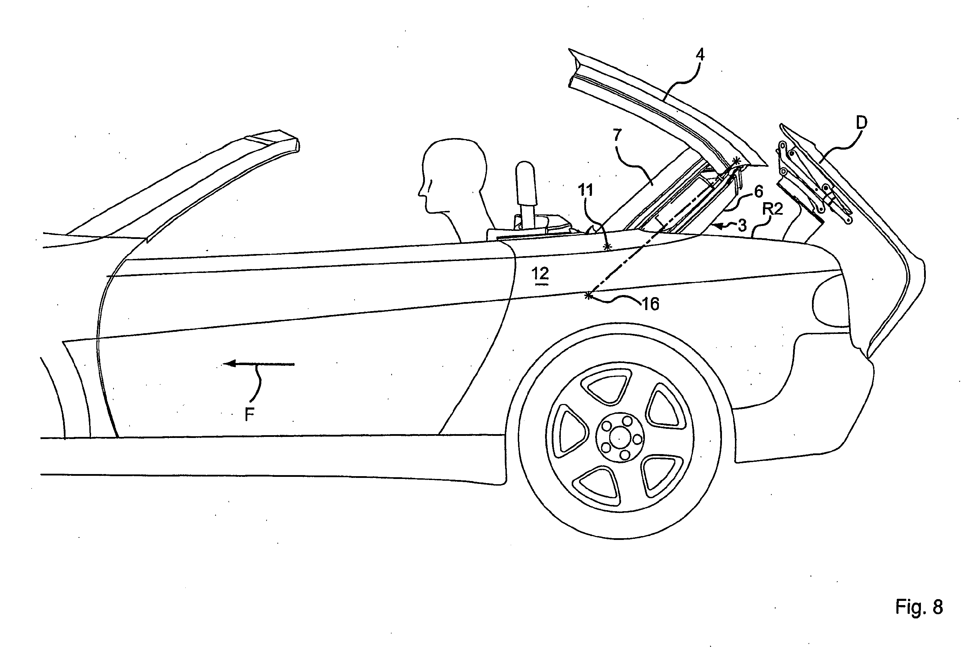

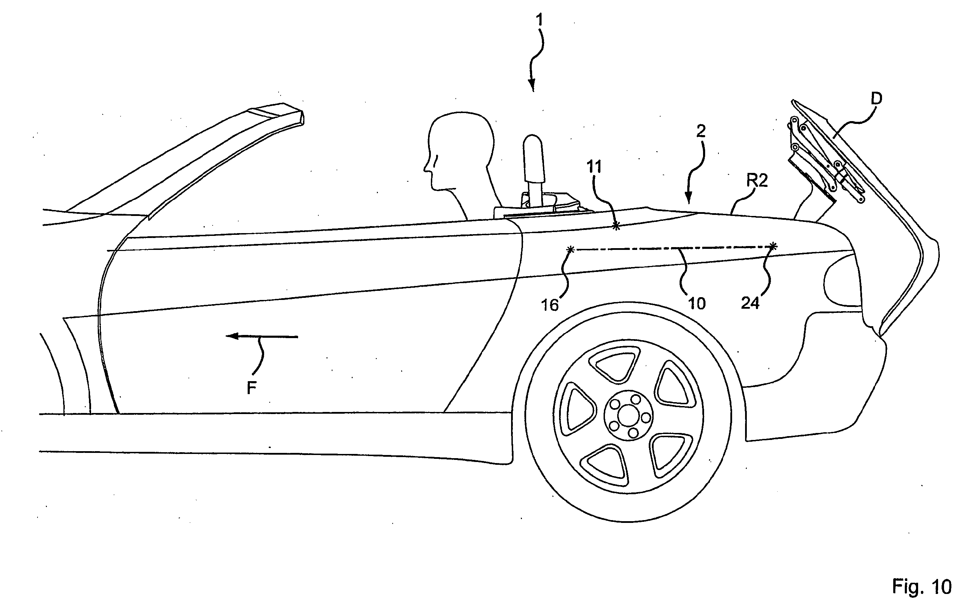

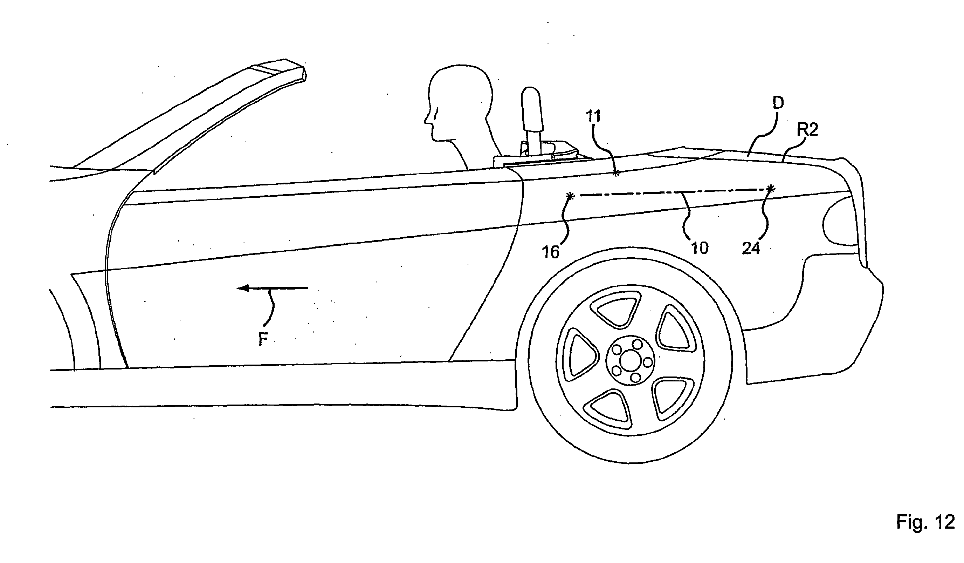

- Fig. 1 bis Fig. 12: die Phasen der Dachöffnung eines erfindungsgemäßen Cabriolet-Fahrzeugs in einer im vorderen Bereich abgebrochenen Seitenansicht, darin
- Fig. 1: das Fahrzeug bei geschlossenem Dach,

- Fig. 2: eine ähnliche Ansicht wie Fig. 1 mit zusätzlich eingezeichneter Drehachse der C-Säulen,
- Fig. 3: eine ähnliche Ansicht wie Fig. 1 bei noch geschlossenem Dach und bereits zur Freigabe einer Durchtrittsöffnung für das Dach geöffnetem Heckdeckel,
- Fig. 4: eine ähnliche Ansicht wie Fig. 3 mit zusätzlich eingezeichneter Drehachse der C-Säulen,
- Fig. 5: eine ähnliche Ansicht wie Fig. 3 bei beginnender Dachöffnung,
- Fig. 6: eine ähnliche Ansicht wie Fig. 5 mit zusätzlich eingezeichneter Drehachse der C-Säulen,
- Fig. 7: eine ähnliche Ansicht wie Fig. 5 bei weiter fortschreitender Dachöffnung,
- Fig. 8: eine ähnliche Ansicht wie Fig. 7 mit zusätzlich eingezeichneter Drehachse der C-Säulen,
- Fig. 9: eine ähnliche Ansicht wie Fig. 7 bei geöffnetem Dach und noch geöffnetem Heckdeckel,
- Fig. 10: eine ähnliche Ansicht wie Fig. 9 mit zusätzlich eingezeichneter Drehachse der C-Säulen,
- Fig. 11: eine ähnliche Ansicht wie Fig. 9 bei vollständig geöffnetem Dach,
- Fig. 12: eine ähnliche Ansicht wie Fig. 11 mit zusätzlich eingezeichneter Drehachse der C-Säulen,
- Fig. 13: eine perspektivische Ansicht des Fahrzeughecks mit konventioneller Randfuge und zusätzlich eingezeichneter Randfuge des Heckdeckels des erfindungsgemäßen Fahrzeugs,
- Fig. 14 bis Fig. 21: die Phasen der Dachöffnung in perspektivischer Ansicht der in Fahrtrichtung linken Dachhälfte des herausgezeichneten Daches, darin

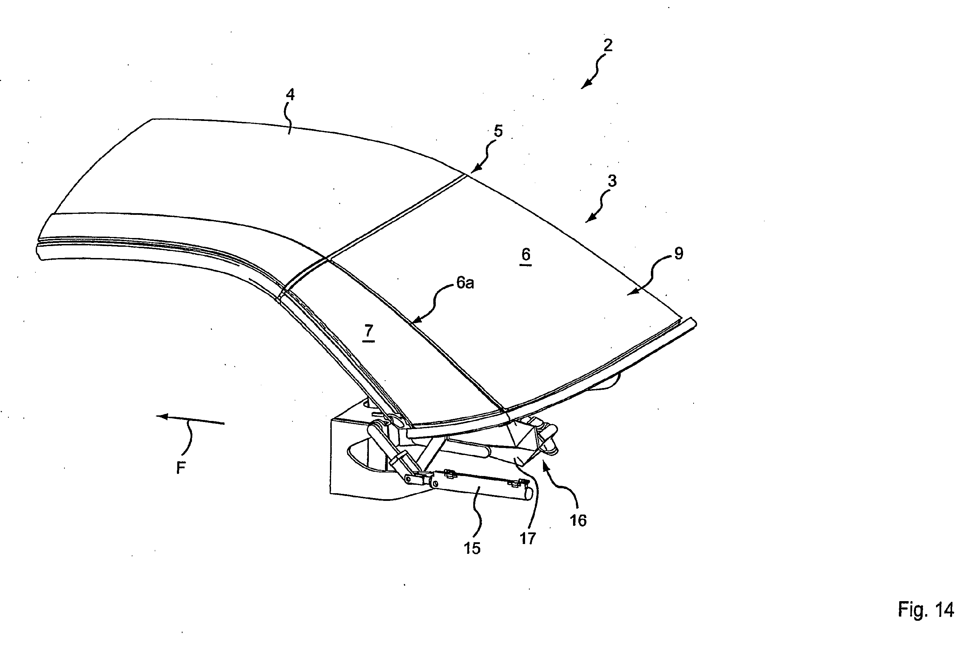

- Fig. 14: eine Ansicht des geschlossenen Daches,

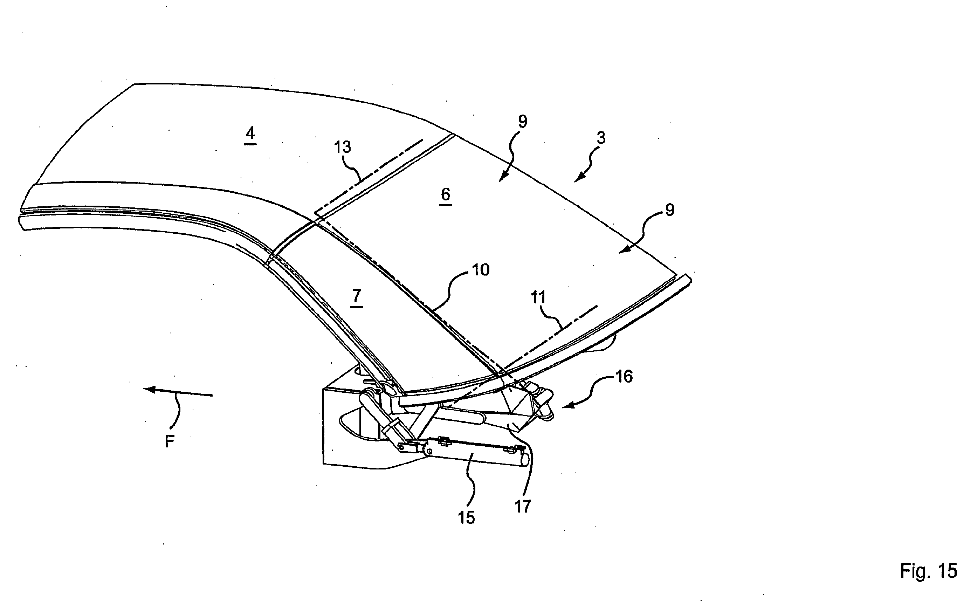

- Fig. 15: eine ähnliche Ansicht wie Fig. 14 mit zusätzlich eingezeichneter Drehachse der C-Säule und Schwenkachsen des hinteren Dachteils gegenüber der Karosserie und der Dachteile gegeneinander,

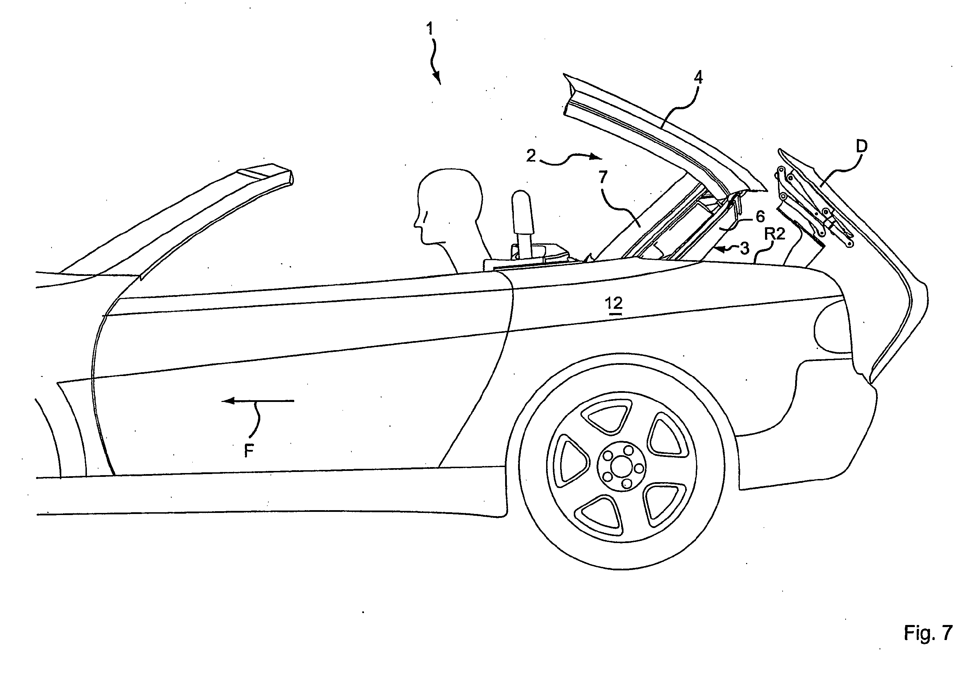

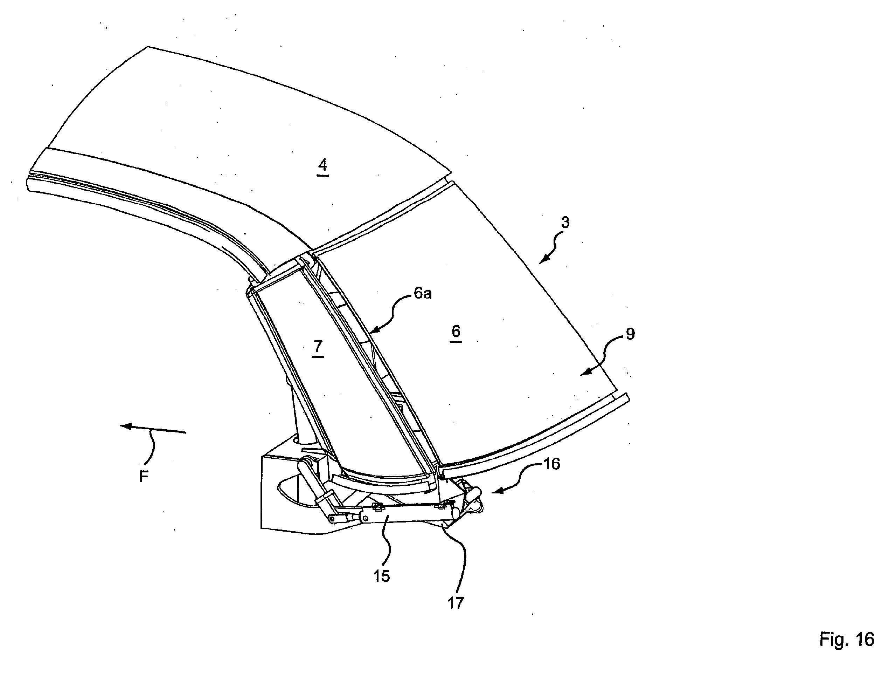

- Fig. 16: eine Ansicht des Daches während seiner beginnenden Öffnung, etwa entsprechend der Stellung nach Fig. 7,

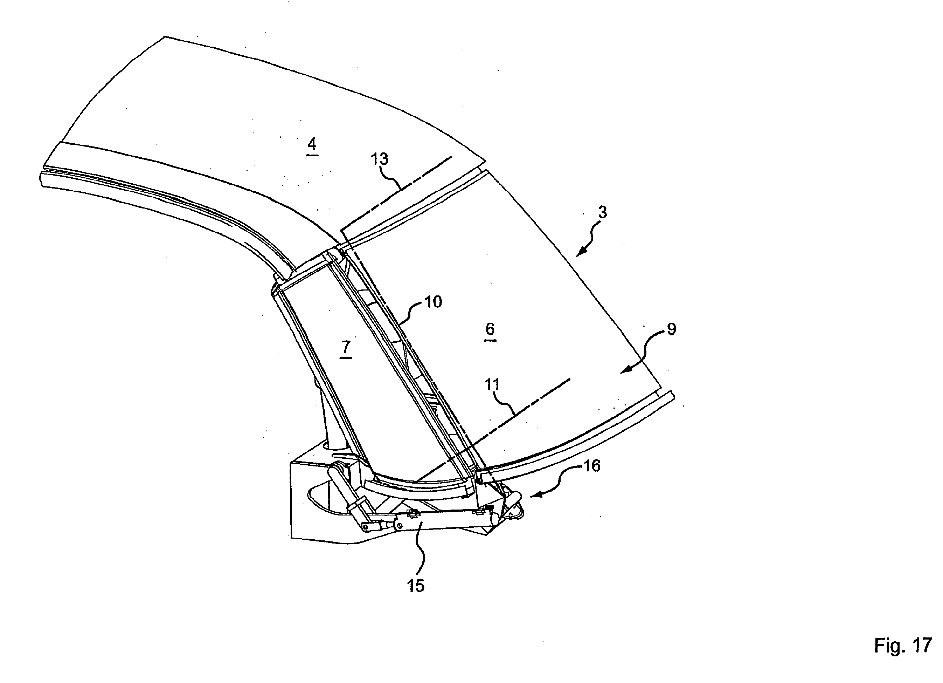

- Fig. 17: eine ähnliche Ansicht wie Fig. 16 mit zusätzlich eingezeichneter Drehachse der C-Säule und Schwenkachsen des hinteren Dachteils gegenüber der Karosserie und der Dachteile gegeneinander,

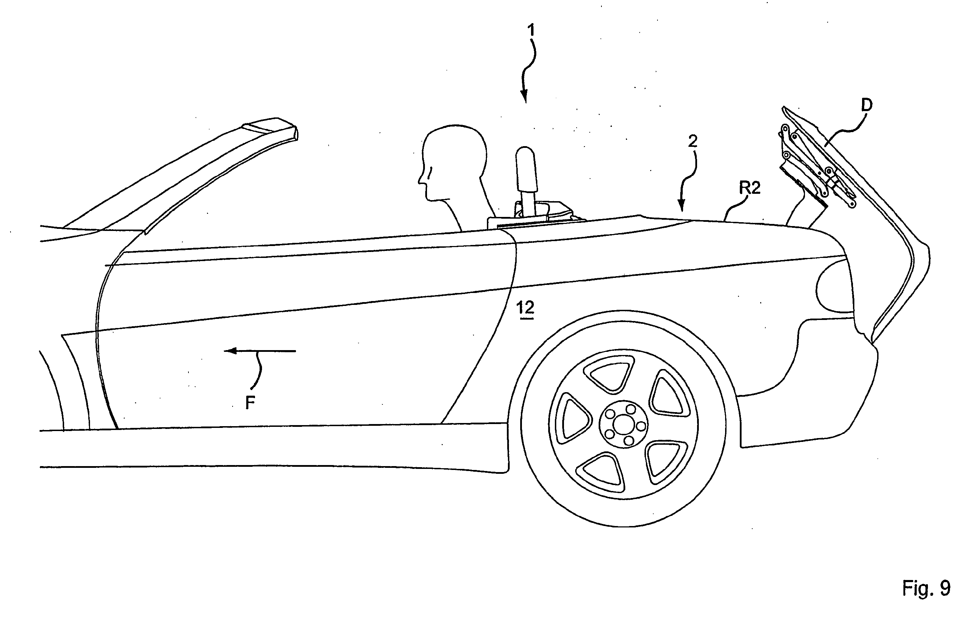

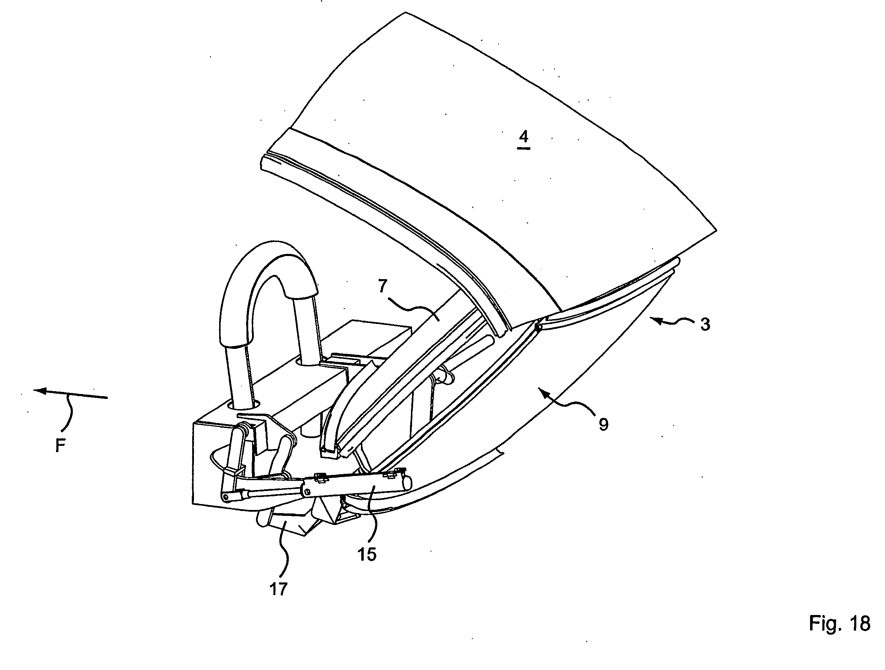

- Fig. 18: eine Ansicht des Daches während seiner fortschreitenden Öffnung, etwa entsprechend der Stellung nach Fig. 9,

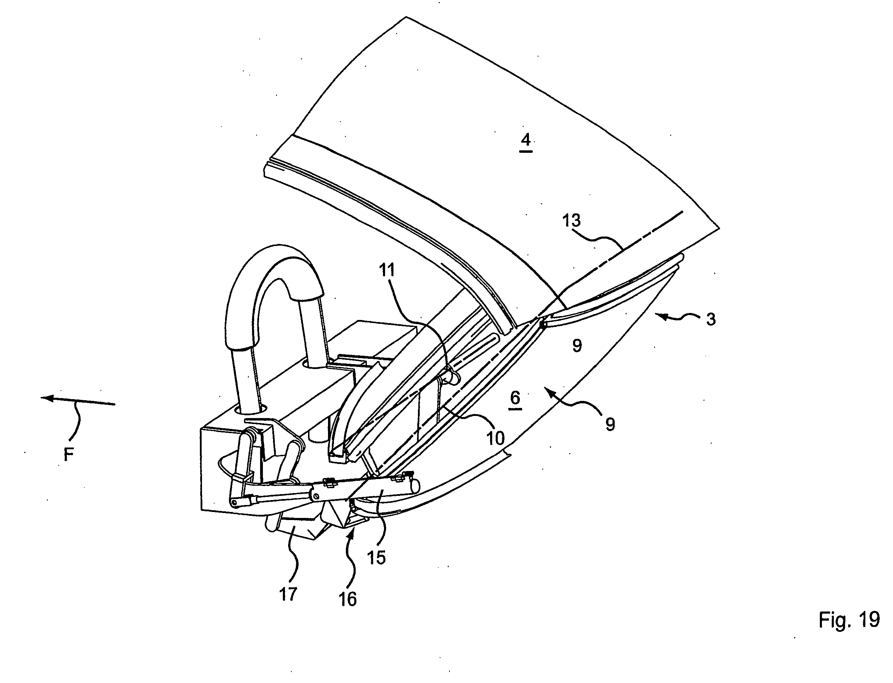

- Fig. 19: eine ähnliche Ansicht wie Fig. 18 mit zusätzlich eingezeichneter Drehachse der C-Säule und Schwenkachsen des hinteren Dachteils gegenüber der Karosserie und der Dachteile gegeneinander,

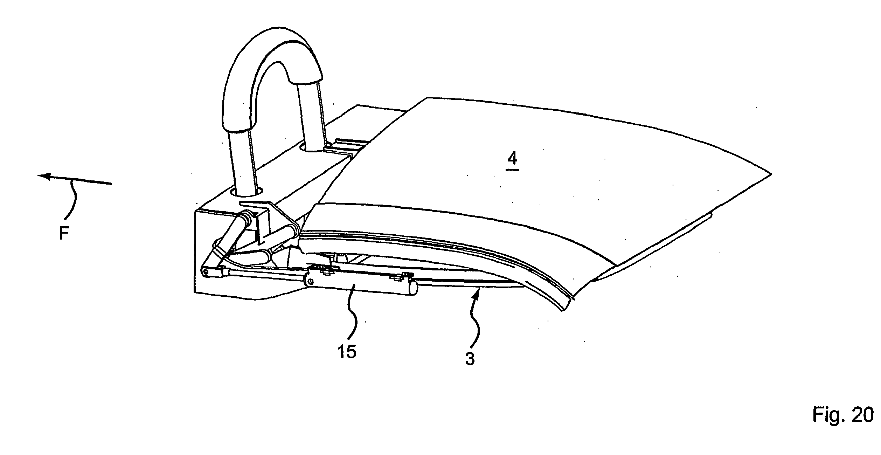

- Fig. 20: eine Ansicht des geöffneten Daches,

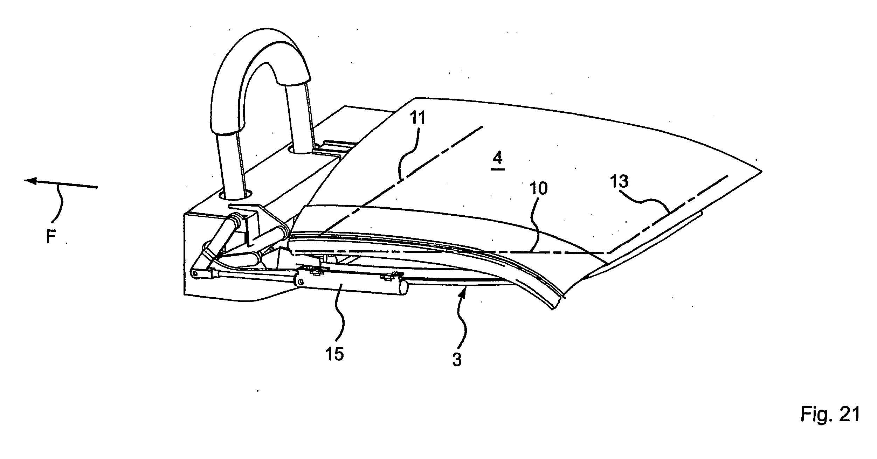

- Fig. 21: eine ähnliche Ansicht wie Fig. 20 mit zusätzlich eingezeichneter Drehachse der C-Säule und Schwenkachsen des hinteren Dachteils gegenüber der Karosserie und der Dachteile gegeneinander,

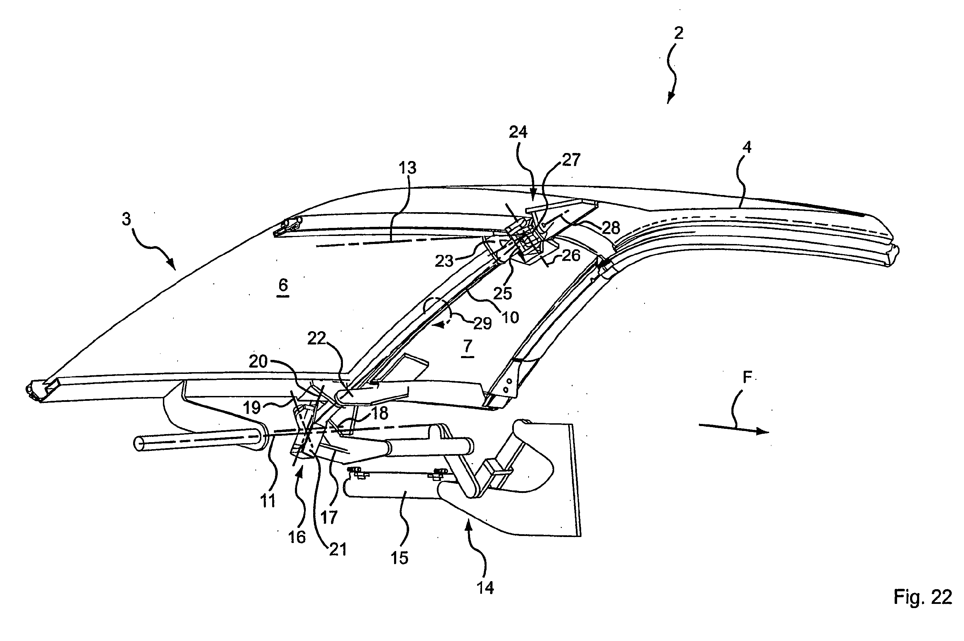

- Fig. 22 bis Fig. 29: die Phasen der Dachöffnung in perspektivischer Ansicht aus Richtung des Insassenraums auf die in Fahrtrichtung linke hintere Dachecke des herausgezeichneten Daches, darin
- Fig. 22: das geschlossene Dach mit zusätzlich eingezeichneter Drehachse der C-Säule und Schwenkachsen des hinteren Dachteils gegenüber der Karosserie und der Dachteile gegeneinander,

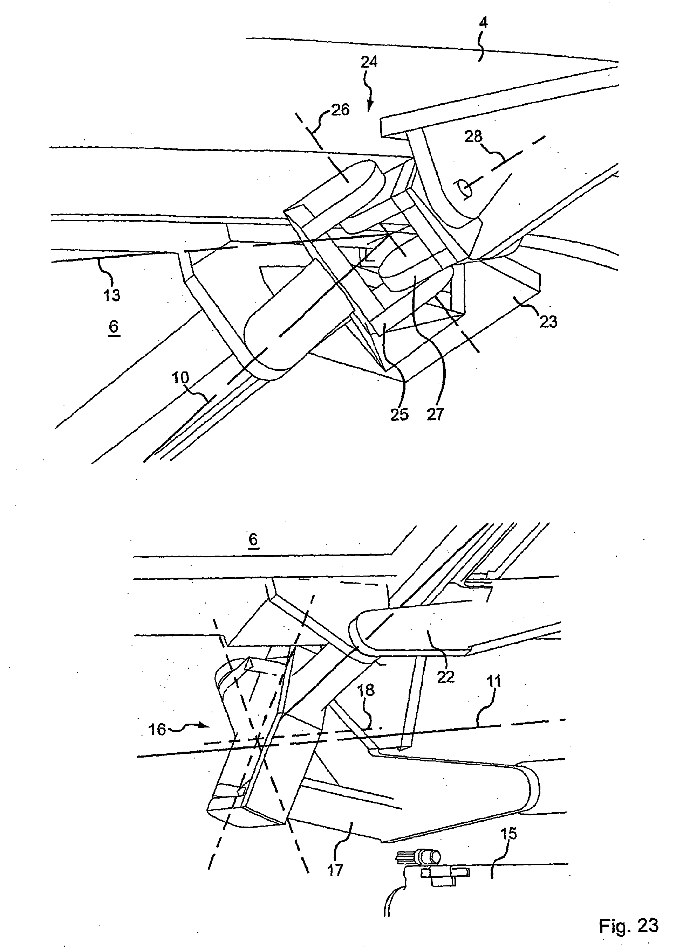

- Fig. 23: eine Detailansicht des oberen und des unteren räumlichen Getriebes in dieser Stellung,

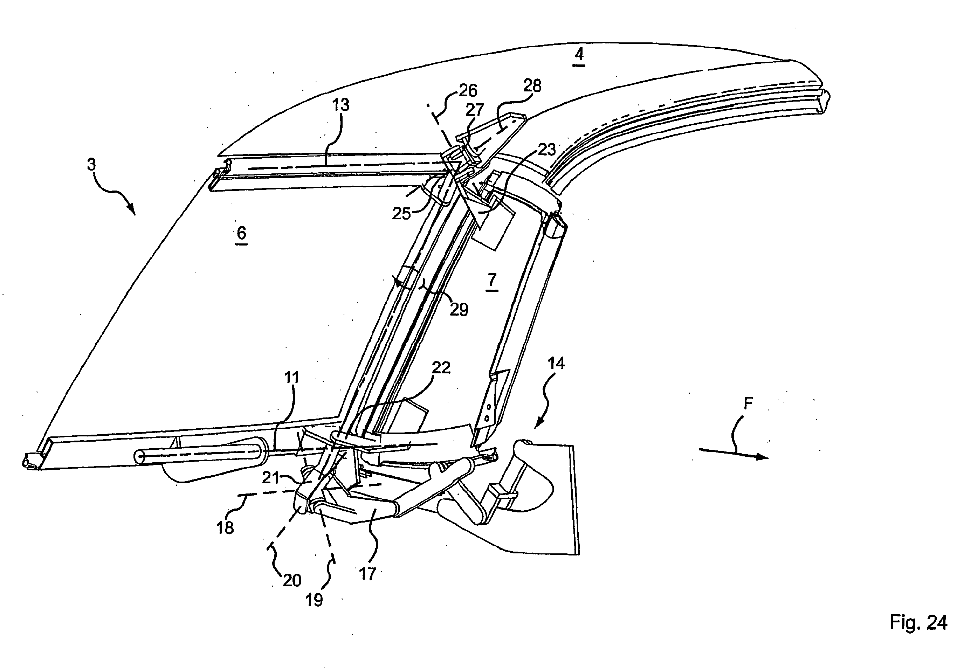

- Fig. 24: das Dach mit zusätzlich eingezeichneter Drehachse der C-Säule und Schwenkachsen des hinteren Dachteils gegenüber der Karosserie und der Dachteile gegeneinander während seiner beginnenden Öffnung, etwa entsprechend der Stellung nach den Figuren 7 und 16,

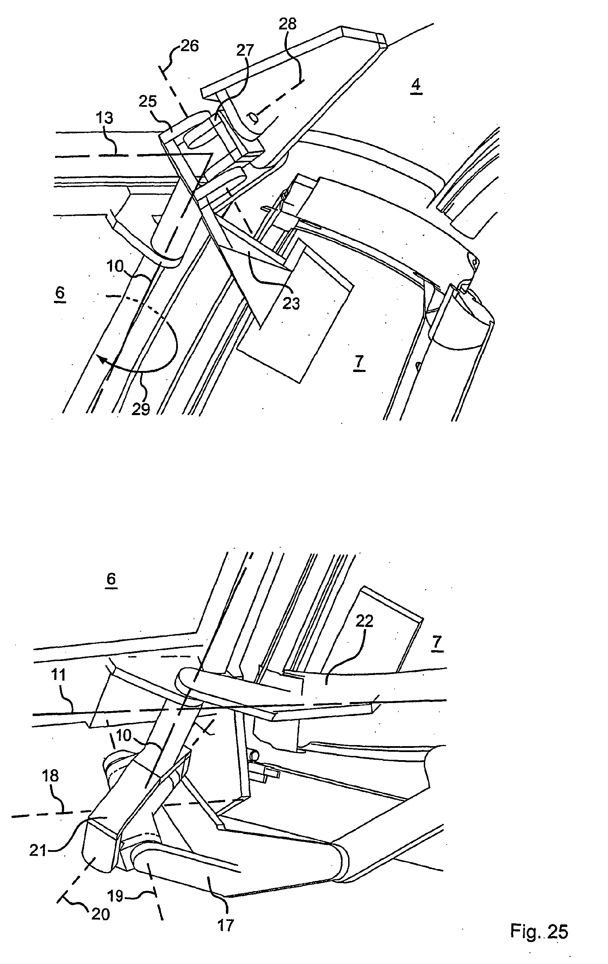

- Fig. 25: eine Detailansicht des oberen und des unteren räumlichen Getriebes in dieser Stellung,

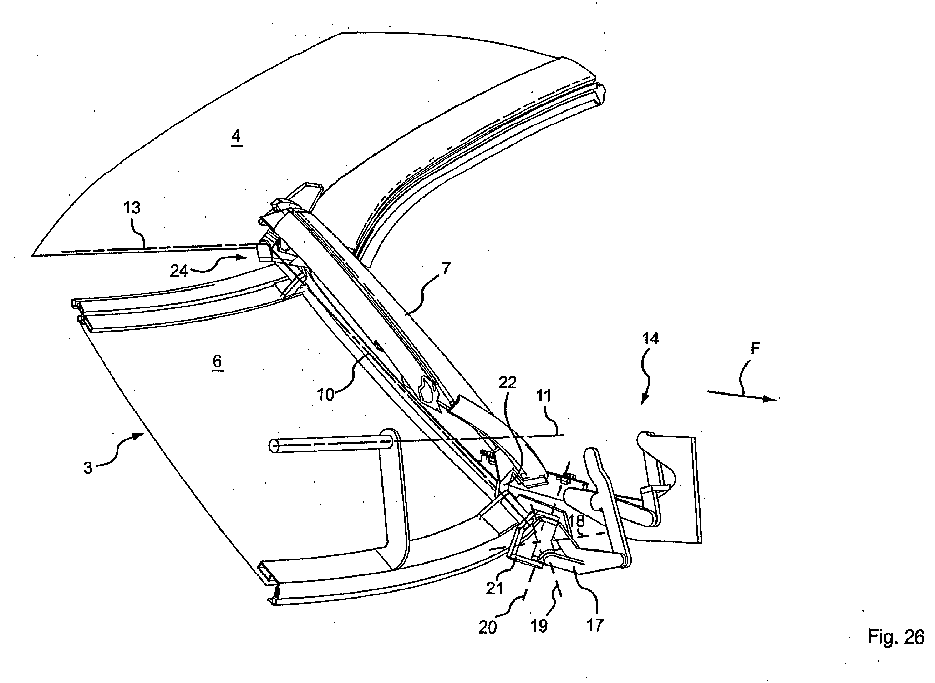

- Fig. 26: das Dach mit zusätzlich eingezeichneter Drehachse der C-Säule und Schwenkachsen des hinteren Dachteils gegenüber der Karosserie und der Dachteile gegeneinander während seiner beginnenden Öffnung, etwa entsprechend der Stellung nach den Figuren 9 und 18,

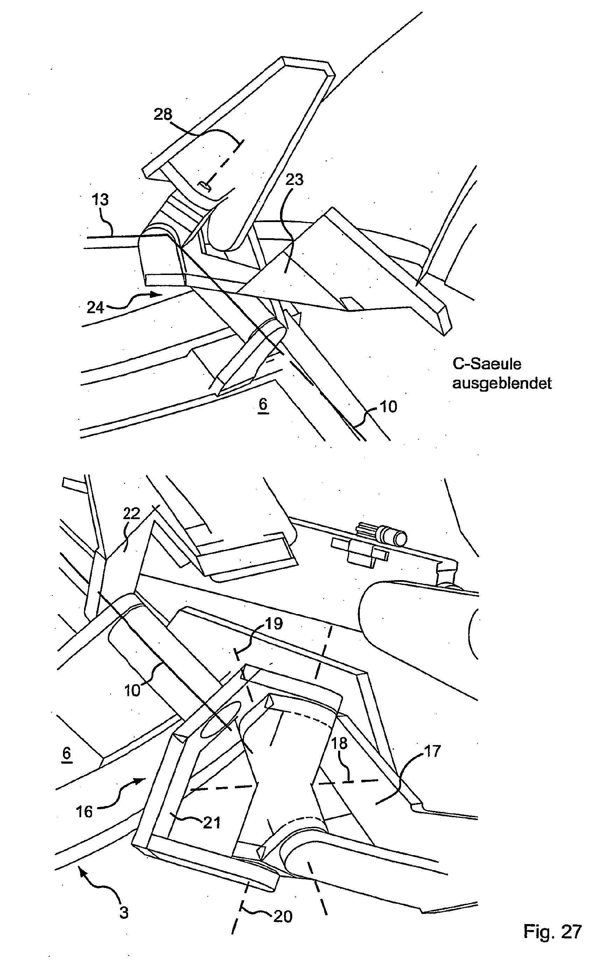

- Fig. 27: eine Detailansicht des oberen und des unteren räumlichen Getriebes in dieser Stellung,

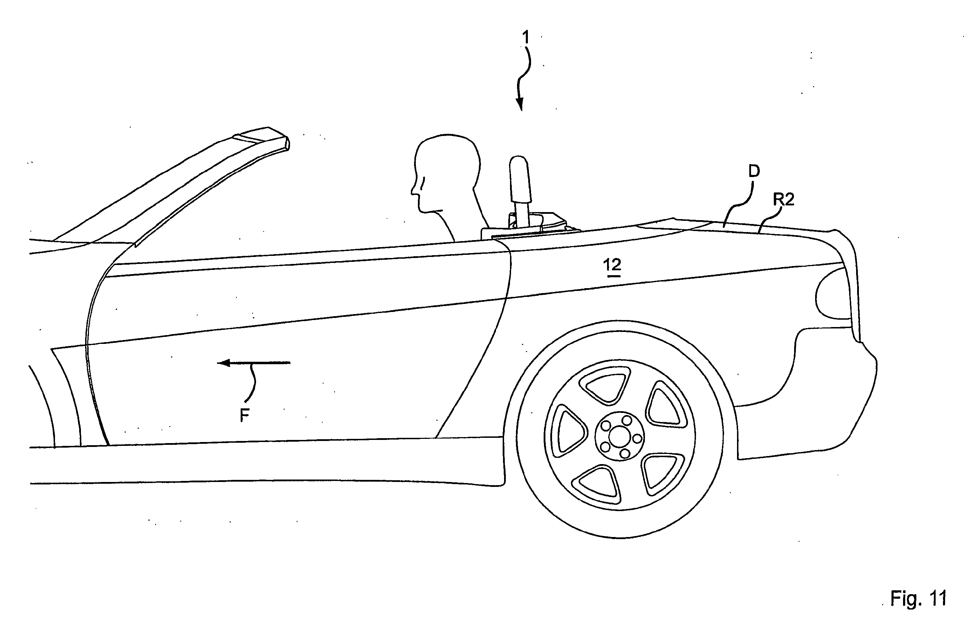

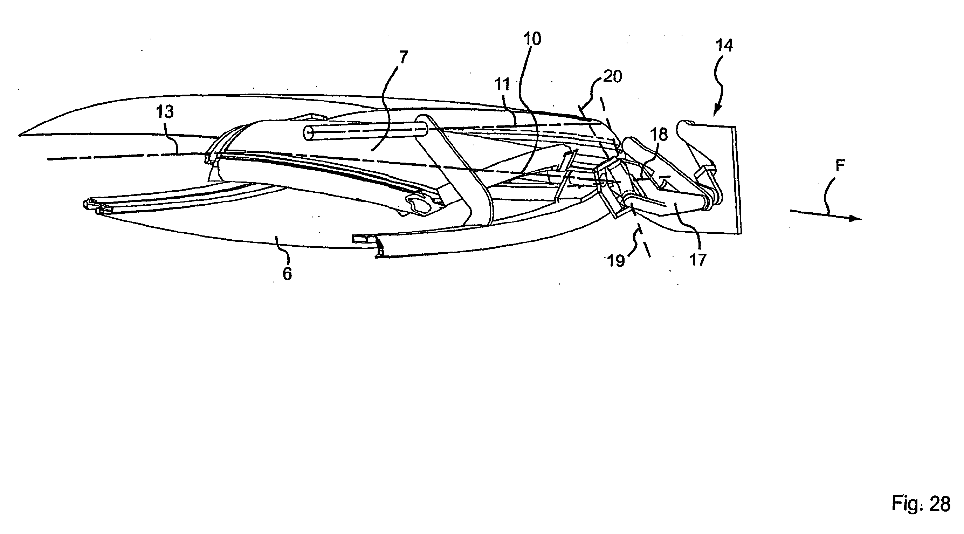

- Fig. 28: das Dach mit zusätzlich eingezeichneter Drehachse der C-Säule und Schwenkachsen des hinteren Dachteils gegenüber der Karosserie und der Dachteile gegeneinander in seiner geöffneten Stellung, etwa entsprechend den Figuren 11 und 20,,

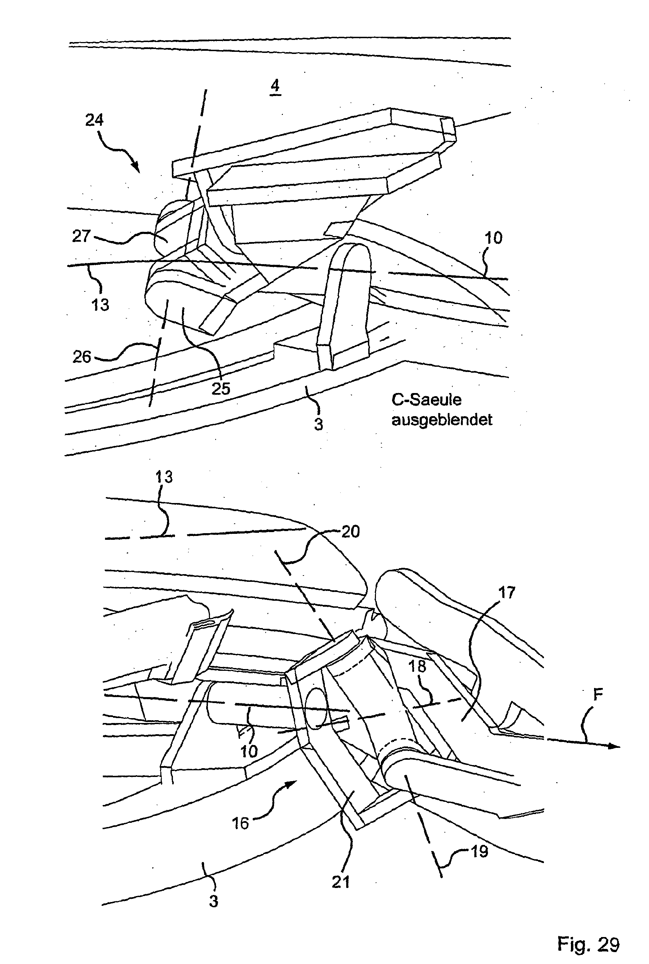

- Fig. 29: eine Detailansicht des oberen und des unteren räumlichen Getriebes in dieser Stellung,

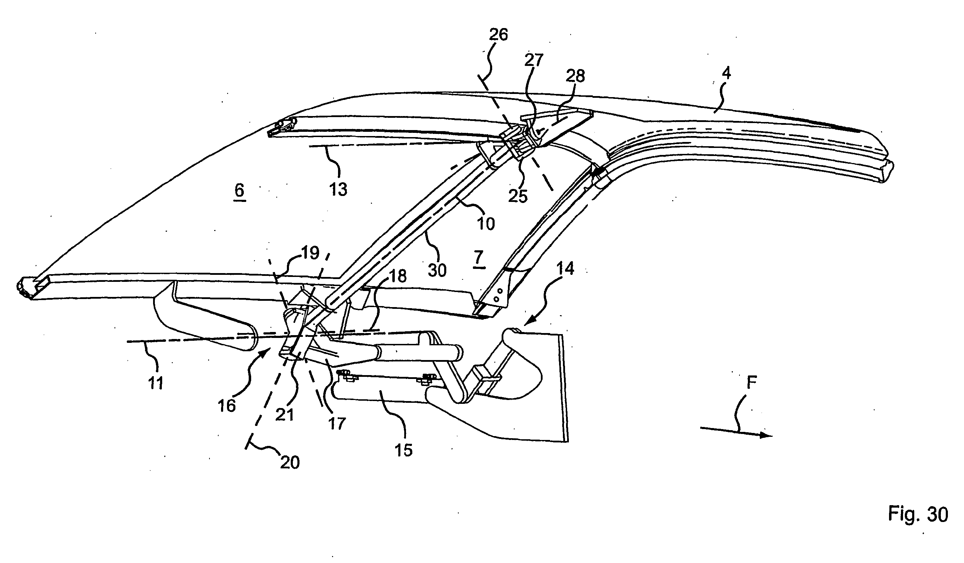

- Fig. 30: eine ähnliche Ansicht wie Fig. 22, jedoch mit einer durchgehenden, das obere und untere räumliche Getriebe verbindenden Torsionsstange.

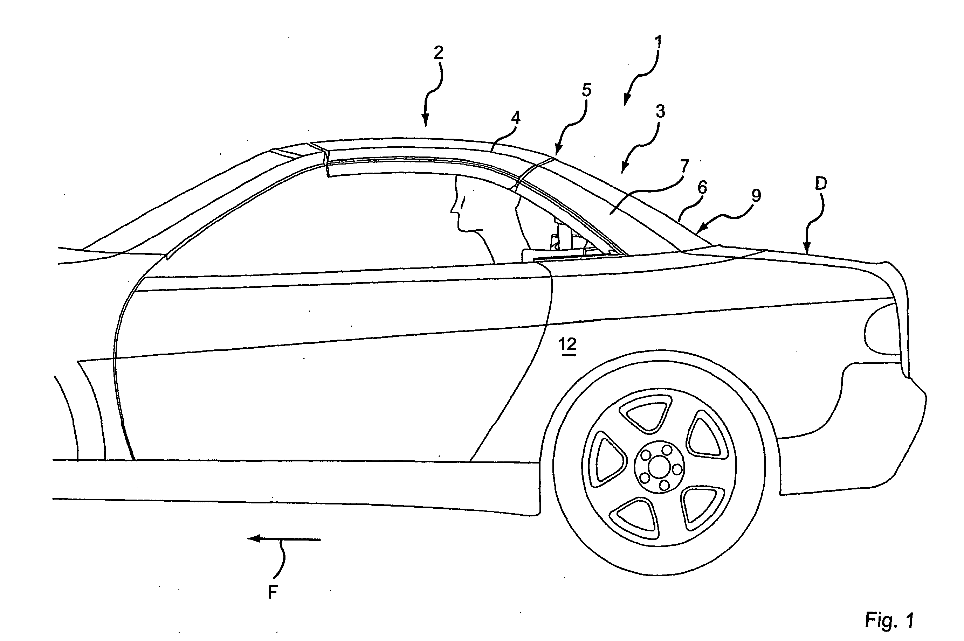

Das erfindungsgemäße Cabriolet-Fahrzeug 1 umfaßt in den dargestellten Ausführungsbeispielen zwei bei geschlossenem Dach 2 bezüglich der Fahrtrichtung F aufeinander folgende und an einer zumindest im wesentlichen quer zum Fahrzeug liegenden Fuge 5 voneinander getrennte Dachteile 3, 4. Das hintere Dachteil 3 umfaßt in einem bezüglich der Fahrzeugquerrichtung mittleren Abschnitt 9 eine Heckscheibe 6 und ragt schräg aufwärts. Die Heckscheibe 6 kann faltbar oder insbesondere starr ausgebildet sein und beispielsweise aus Kunststoff oder Glas bestehen. Das Dachteil 4 ist dem hinteren Dachteil 3 in geschlossener Stellung (Fig. 1) vorgeordnet und liegt im wesentlichen horizontal. Ein oder mehrere weitere bewegliche Dachteile können etwa mit dem vorderen Dachteil 4 beweglich verbunden, beispielsweise daran angelenkt sein. Das erfindungsgemäße Cabriolet-Fahrzeug 1 kann daher sowohl ein Zweisitzer sein als auch einen größeren Insassenraum mit zwei oder mehr Sitzreihen hintereinander umfassen.

Die Dachteile 3, 4 sind im wesentlichen aus starren Teilen gebildet, umfassen zumindest starre Rahmen, über die ein Bezug gespannt sein kann.

Das hintere Dachteil 3 ist in den Ausführungsbeispielen über seine Höhenerstreckung geteilt und umfaßt außer dem mittleren Abschnitt 9 zumindest im wesentlichen seitlich neben diesem gelegene und gegenüber dem mittleren Abschnitt 9 bewegliche C-Säulen 7. Diese können auch Querausleger oder ähnliches umfassen, die sich ober- oder unterhalb der Heckscheibe 6 in Richtung einer vertikalen Längsmittelebene 8 erstrecken. Die C-Säulen 7 sind hier bei der Dachöffnung gegenüber dem mittleren Abschnitt 9 mit der Heckscheibe 6 des Dachteils 3 um Drehachsen 10 einschwenkbar, die zumindest teilweise gleichzeitig die Antriebswellen A für das Einschwenken des vorgeordneten Dachteils 4 gegenüber dem hinteren Dachteil 3 bilden und die bei geschlossenem Dach 2 jeweils eine Komponente in Fahrtrichtung F, eine quer zur Fahrtrichtung F und eine aufwärts gerichtete Komponente aufweisen. In den hier gezeigten Ausführungsbeispielen liegen die Drehachsen 10 parallel zur Erstreckungsebene des hinteren Dachteils 3 und parallel zu den seitlichen Rändern 6a der Heckscheibe 6, was nicht zwingend ist.

Zur Dachöffnung ist das hintere Dachteil 3 heckwärts und abwärts verlagerbar und das vorgeordnete Dachteil 4 an das hintere Dachteil 3 heranschwenkbar.

Die Verlagerung des hinteren Dachteils 3 erfolgt um eine horizontale und quer zum Fahrzeug 1 liegende erste Schwenkachse 11, die bezüglich der Karosserie 12 ortsfest oder während der Öffnung verlagerbar sein kann. Die Ablagebewegung kann auch eine überlagerte Bewegung mit translatorischen und rotatorischen Anteilen auf einer Kreisbahn oder anderen Kurve sein. Im Ausführungsbeispiel ist die Achse 11 ortsfest bezüglich der Karosserie 12.

Das Heranschwenken des vorgeordneten Dachteils 4 an das hintere Dachteil 3 erfolgt um eine zweite, mit diesem bewegbare obere horizontale Schwenkachse 13 und ist über die Antriebswellen A vermittelbar.

Das Dach 2 ist über seitliche Hauptlager 14 an der Karosserie 12 beweglich gehalten. Die Öffnungs- oder Schließbewegung des hinteren Dachteils 3 ist dabei durch um hier zwei diese bewegende seitliche Antriebe 15 bewirkbar. Auch ein nur einzelner seitlicher oder mittiger Antrieb 15 kann ausreichend sein. Im Ausführungsbeispiel liegen an beiden Fahrzeugseiten gleichartige bauliche Verhältnisse vor, wobei zwei seitliche Antriebe 15 vorgesehen sind.

Um die horizontale erste Schwenkachse 11 schwenken beim Dachöffnen oder -schließen zwei die Antriebswellen A kreuzende und seitlich liegende untere räumliche Getriebe 16. Diese sind in den Ausführungsbeispielen als Kreuzgelenke ausgebildet, was nicht zwingend, jedoch mechanisch besonders einfach und in der Funktion zuverlässig ist. Die Antriebswellen A verlaufen dabei im obersten und im untersten Bereich ihrer Erstrekkung deckungsgleich mit Drehachsen 10, um die die hier separat schwenkbaren C-Säulen eindrehbar sind.

Die unteren Kreuzgelenke 16 sind jeweils an einem beweglichen, schräg zu den Kreuzgelenken 16 stehenden Gabelhebel 17 gehalten. Dieser ist um eine horizontale, quer zum Fahrzeug 1 verlaufende und während der Dachöffnung auf einer Kreisbahn um die erste Schwenkachse 11 herum bewegbare Achse 18 schwenkbar. Innerhalb der Gabelaufnahme des Hebels 17 ist ein erster Arm eines x-förmigen Kreuzkörpers gehalten, in dessen Zentrum sich die Achse 19 dieses Arms mit der Achse 20 des zweiten Arms in spitzem Winkel schneidet. Auch die Achse 18 schneidet diesen Punkt. Der zweite Arm des Kreuzkörpers mit seiner Drehachse 20 ist von einer zweiten Gabelaufnahme 21 eingefaßt, die schräg zur Drehachse 10 und Antriebswelle A steht und mit letzterer verbunden ist. Da auch die Antriebswelle A den Kreuzungspunkt der Achsen 18, 19, 20 schneidet, ist das räumliche Getriebe 16 daher als sphärisches Getriebe ausgebildet.

Ein Schwenken des hinteren Dachteils 3 um die Achse 11 bewirkt somit zwangsweise ein Drehen der Antriebswellen A, ohne daß es hierfür eines eigenen Antriebs bedarf. Die Antriebswellen A können wie im ersten Ausführungsbeispiel über seitlich ausgreifende Ausleger 22, 23 abgekröpft sein, so daß sie im mittleren Bereich von den C-Säulen 7 selbst gebildet sind. Dies ist dadurch ermöglicht, daß die Antriebswellen A im unteren Bereich als Achsstummel ausgebildet sind und nur von den Kreuzgelenken 16 bis zu den Auslegern 22 reichen. Diese übertragen die Drehbewegung weiter auf die weiter außen liegenden C-Säulen 7, die somit ebenfalls Teil der Antriebswellen A werden, und über obere Ausleger 23 wieder einwärts auf obere Kreuzgelenke 24, die als obere räumliche Getriebe die Drehbewegung der Antriebswellen A in die Heranschwenkbewegung zwischen den Dachteilen 3, 4 um die obere Schwenkachse 13 übersetzen.

Dadurch, daß die Antriebswellen A im oberen und unteren Bereich über die Ausleger 22, 23, durch die hindurch die Drehachsen 10 der C-Säulen 7 verlaufen, in die gegenüber den Drehachsen 10 weiter außen liegenden C-Säulen einmünden, können diese über einen bezüglich der Vertikalen mittleren Teil ihrer Erstreckung mit ihren der Fahrzeugmitte 8 zugewandten Kanten weit außen verlaufen. Die äußeren Ränder 6a der Heckscheibe 6 können somit seitlich außerhalb der Drehachsen 10 liegen, ohne von diesen überdeckt zu werden. Die Sicht nach hinten ist dadurch optimiert.

Insgesamt ist somit das hintere Dachteil 3 zu seiner Verlagerungsbewegung um eine quer zum Fahrzeug liegende erste Achse 11 schwenkbar, das vorgeordnete Dachteil 4 gegenüber dem hinteren Dachteil 3 um eine parallel hierzu liegende zweite 13 Achse schwenkbar, und die im oberen und unteren Bereich die Drehachsen 10 der C-Säulen 7 umfassenden Antriebswellen A koppeln die Bewegungen um beide Schwenkachsen 11, 13.

Die Kreuzgelenke 24 im oberen Bereich der Antriebswellen A und Drehachsen 10 übersetzen ebenfalls ohne weitere Antriebe die Drehbewegung der Antriebswellen A in die Schwenkbewegung des vorgeordneten Dachteils 4 gegenüber dem hinteren Dachteil 3 um die quer zum Fahrzeug und horizontal liegende zweite Schwenkachse 13.

Hierzu umfassen die Kreuzgelenke 24 jeweils eine schräg zur Achse 10 und Welle A stehende Gabelaufnahme 25, in die die Antriebswellen A einmünden. Diese ist über eine erste Hilfsachse 26 mit einer zweiten Gabelaufnahme 27 verbunden, die an dem vorgeordneten Dachteil 4 um eine zweite Hilfsachse 28 schwenkbar angelenkt ist. Durch das über die Ausleger 23 von den C-Säulen 7 eingeleitete Drehmoment um die Achsen 10 wird die Gabelaufnahme 25 bei der Dachöffnung in Richtung des Pfeils 29 verschwenkt und zieht dabei die gegenüber liegende Gabelaufnahme 27 nach unten in Richtung des hinteren Dachteils 3, so daß das vorgeordnete Dachteil 4 zwangsweise um die Achse 13, die beide Hilfsachsen 26, 28 und die Drehachsen 10 kreuzt, einschwenkt. Auch das obere Getriebe 24 ist daher ein sphärisches Getriebe, bei dem sich alle Achsen 10, 26, 28, 13 in einem Punkt schneiden.

Damit genügt insgesamt zur Bewegung des hinteren Dachteils 3 um die quer zum Fahrzeug 1 liegende erste Schwenkachse 11, des vorgeordneten Dachteils 4 um die zweite Horizontalschwenkachse 13 und zur Drehbewegung der C-Säulen 7 um die Achsen 10 ein einziger Antrieb 15, über den direkt die Bewegung des hinteren Dachteils 3 um die erste Achse 11 antreibbar ist.

Wie beschrieben, sind im ersten Ausführungsbeispiel sind dabei die Drehachsen 10 der C-Säulen 7 im oberen und unteren Bereich von den Antriebswellen A umfaßt, so daß das Heranschwenken des vorgeordneten Dachteils 4 über die Drehbewegung der C-Säulen 7 vermittelbar und hierfür im Bereich der Fuge 5 zwischen den Dachteilen 3, 4 in eine Schwenkbewegung zwischen diesen übersetzbar ist.

Alternativ kann auch, wie im zweiten Ausführungsbeispiel nach Fig. 30 gezeigt ist, an jeder Fahrzeugseite eine durchgehende Torsionsstange 30 als Antriebswelle A angeordnet sein, an die die C-Säulen angehängt sind. Dann übernehmen die C-Säulen selbst keine kraftvermittelnde Funktion zur Einleitung eines Drehmoments in das obere Dachteil und sind somit nicht Bestandteil der Antriebswellen A, sondern die Kraftvermittlung wird vielmehr allein über die durchgehende Torsionsstange 30 bewirkt.

Es wäre alternativ auch möglich, die Torsionsstangen 30 als Antriebswellen A zu verwenden, ohne die C-Säulen 7 an diese anzuhängen oder überhaupt separat beweglich zu gestalten. Dann würde bei abgelegtem Dach allerdings die volle Breite des hinteren Dachteils 3 erhalten bleiben.

In den beiden gezeichneten Ausführungsbeispielen werden hingegen während der Dachöffnung die C-Säulen 7 um die Achsen 10 derart gegenüber dem mittleren Abschnitt 9 eingeschwenkt, daß sie in geöffneter Dachstellung zwischen den Dachteilen 3, 4 und dabei gleichsinnig zum vorderen Dachteil 4 gewölbt liegen. Da die Dachteile 3, 4 ohnehin in abgelegter Stellung gegensinnig gekrümmt zueinander liegen, kann der dazwischen entstehende Hohlraum ohne weiteren Raumverlust sehr vorteilhaft für die einschwenkenden C-Säulen 7 genutzt werden.

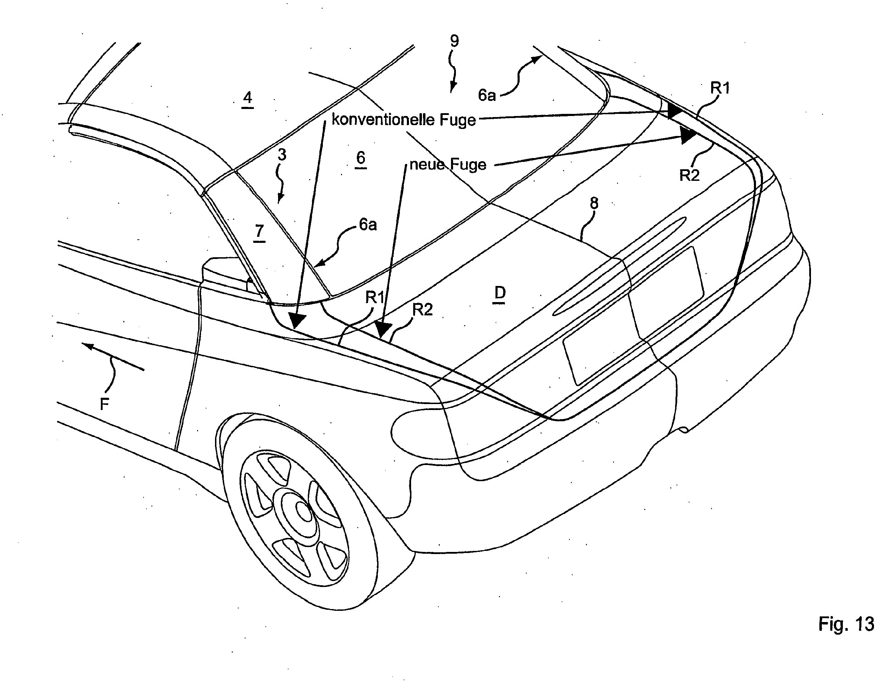

Mit der vorteilhaften Verschmälerung des Daches 2 durch Eindrehen der C-Säulen 7 beim Öffnen ist in jedem Fall auch eine Verschmälerung des Verdeckkastendeckels D möglich. Dessen seitlicher Rand muß nun nicht mehr wie im Stand der Technik bis zur seitlich außerhalb der Durchtrittsbreite für die C-Säulen liegenden Fuge R1 erstreckt sein, sondern kann an der näher zur Fahrzeugmitte 8 gerückten Randfuge R2, die bei geöffnetem Verdeckkastendeckel D lediglich eine hinreichende Durchtrittsbreite für den mittleren Bereich 9 beläßt, enden (Fig. 13), wodurch das Design im Heckbereich deutlich verbessert ist.

Das gesamte bewegliche Dach 2 kann vor Einbau in den Rohbau auf Funktion getestet werden; die so fertig eingestellte modulare Einheit kann dann an den Rohbau angeliefert und lediglich über seitliche Hauptlager 14 mit diesem verbunden werden.

Die Erfindung ist sowohl bei Fahrzeugen mit manuell zu bewegenden Dächern auch insbesondere bei voll- oder teilautomatischer Beweglichkeit des Daches 2 anwendbar.

## Patentansprüche

1. Cabriolet-Fahrzeug (1) mit zumindest zwei in geschlossener Dachstellung an einer Fuge (5) voneinander getrennten und bezüglich der Fahrtrichtung (F) aufeinander folgenden Dachteilen (3;4), wobei zur Dachöffnung ein hinteres Dachteil (3) zumindest im wesentlichen heckwärts und abwärts verlagerbar und ein gegenüber diesem vorgeordnetes Dachteil (4) an das hintere Dachteil (3) heranschwenkbar ist,
**dadurch gekennzeichnet,**
**daß** zur Vermittlung des Heranschwenkens zumindest eine Welle (A) vorgesehen ist, die bei geschlossenem Dach (2) zumindest eine Komponente in Fahrtrichtung (F) und eine aufwärts gerichtete Komponente aufweist und deren Drehbewegung im Bereich der Fuge (5) zwischen den Dachteilen (3;4) in eine Schwenkbewegung zwischen diesen übersetzbar ist.

2. Cabriolet-Fahrzeug (1) nach Anspruch 1
**dadurch gekennzeichnet,**
**daß** die oder jede Welle (A) parallel zur Erstreckungsebene des hinteren Dachteils (3) liegt.

3. Cabriolet-Fahrzeug (1) nach einem der Ansprüche 1 oder 2,
**dadurch gekennzeichnet,**
**daß** zur Übersetzung der Drehbewegung der Welle (A) in die Heranschwenkbewegung zwischen den Dachteilen (3;4) ein oberes räumliches Getriebe (24) angeordnet ist.

4. Cabriolet-Fahrzeug (1) nach einem der Ansprüche 1 bis 3,
**dadurch gekennzeichnet,**
**daß** zum Antrieb der Drehbewegung der Welle (A) ein unteres räumliches Getriebe (16) vorgesehen ist, das eine Verlagerungsbewegung des hinteren Dachteils (3) in die Drehbewegung der Welle (A) übersetzt.

5. Cabriolet-Fahrzeug (1) nach einem der Ansprüche 1 bis 4,
**dadurch gekennzeichnet,**
**daß** das hintere Dachteil (3) zu seiner Verlagerungsbewegung um eine quer zum Fahrzeug (1) liegende erste Achse (11) schwenkbar ist, das vorgeordnete Dachteil (4) gegenüber dem hinteren Dachteil (3) um eine parallel zur ersten Achse (11) liegende zweite Achse (13) schwenkbar ist und die Welle (A) beide Drehbewegungen koppelt.

6. Cabriolet-Fahrzeug (1) nach einem der Ansprüche 1 bis 5,
**dadurch gekennzeichnet,**
**daß** zur Bewegung des hinteren Dachteils (3) um eine quer zum Fahrzeug (1) liegende erste Achse (11), des vorgeordneten Dachteils (4) um eine zweite Achse (13) und zur Drehbewegung der Welle (A) ein einziger Antrieb (15) vorgesehen ist, der zur Bewirkung der Bewegung des hinteren Dachteils (3) um eine quer zum Fahrzeug (1) liegende erste Achse (11) dient.

7. Cabriolet-Fahrzeug (1) nach einem der Ansprüche 5 oder 6,
**dadurch gekennzeichnet,**
**daß** die oberen und/oder die unteren räumlichen Getriebe (24;16) jeweils als sphärische Getriebe ausgebildet sind.

8. Cabriolet-Fahrzeug (1) nach Anspruch 7,
**dadurch gekennzeichnet,**
**daß** die oberen und/oder die unteren räumlichen Getriebe (24;16) jeweils zumindest ein Kreuzgelenk umfassen.

9. Cabriolet-Fahrzeug (1) nach einem der Ansprüche 1 bis 8,
**dadurch gekennzeichnet, daß** an beiden Fahrzeugseiten gleichartige bauliche Verhältnisse vorliegen.

10. Cabriolet-Fahrzeug (1) nach Anspruch 9,
**dadurch gekennzeichnet,**
**daß** die Wellen (A) abgekröpfte (22;23) Enden aufweisen und über einen mittleren Teil ihrer Erstreckung im hinteren Dachteil in seitlich einer Heckscheibe (6) liegenden C-Säulen (7) verlaufen.

11. Cabriolet-Fahrzeug (1) nach Anspruch 10,
**dadurch gekennzeichnet,**
**daß** die C-Säulen (7) durch die Drehbewegung der Wellen (A) um deren Drehachsen (10) bei der Dachöffnung gegenüber der Heckscheibe (6) einschwenkbar und in geöffneter Dachstellung zwischen den Dachteilen (3;4) halterbar sind.

12. Bewegliches Fahrzeugdach (2) für ein Cabriolet-Fahrzeug (1) nach einem der Ansprüche 1 bis 11.

## Claims

1. A cabriolet vehicle (1) with at least two roof parts (3; 4) which, in the closed roof position, are separated from each other at a joint (5) and which are consecutive to one another with respect to the direction of travel (F), whereby, in order to open the roof, a rear roof part (3) is able to be displaced at least substantially rearwards and downwards, and a roof part (4) which is arranged in front with respect to it is able to be pivoted towards the rear roof part (3),
**characterised in that**
in order to facilitate the pivoting together, at least one shaft (A) is provided which has, when the roof (2) is closed, at least one component in the direction of travel (F) and one upwardly orientated component, and of which the rotary movement, in the area of the joint (5) between the roof parts (3; 4), can be translated into a pivoting movement between them.

2. The cabriolet vehicle (1) according to Claim 1,
**characterised in that**
the or each shaft (A) is situated parallel to the extension plane of the rear roof part (3).

3. The cabriolet vehicle (1) according to one of Claims 1 or 2,
**characterised in that**
an upper spatial gear (24) is arranged, in order to translate the rotary movement of the shaft (A) into the pivoting-together movement between the roof parts (3; 4).

4. The cabriolet vehicle (1) according to one of Claims 1 to 3,
**characterised in that**
in order to drive the rotary movement of the shaft (A), a lower spatial gear (16) is provided which translates a displacement movement of the rear roof part (3) into the rotary movement of the shaft (A).

5. The cabriolet vehicle (1) according to one of Claims 1 to 4,
**characterised in that**
the rear roof part (3), for the purposes of its displacement movement, is pivotable around a first axis (11) situated transversely to the vehicle (1), the roof part (4) arranged in front is pivotable in relation to the rear roof part (3) around a second axis (13) which is situated parallel to the the first axis (11) and the shaft (A) couples both rotary movements.

6. The cabriolet vehicle (1) according to one of Claims 1 to 5,
**characterised in that**
in order to move the rear roof part (3) around a first axis (11) situated transversely to the vehicle (1), and to move the roof part (4) arranged in front around a second axis (13) and, in order to move the shaft (A) in a rotary manner, a single drive (15) is provided which serves to cause the movement of the rear roof part (3) around a first axis (11) which is situated transversely to the vehicle (1).

7. The cabriolet vehicle (1) according to one of Claims 5 or 6,
**characterised in that**
the upper and/or the lower spatial gears (24; 16) are respectively formed as spherical gears.

8. The cabriolet vehicle (1) according to Claim 7,
**characterised in that**
the upper and/or the lower spatial gears (24; 16) respectively include at least one universal joint.

9. The cabriolet vehicle (1) according to one of Claims 1 to 8,
**characterised in that**
similar structural relationships are present at both sides of the vehicle.

10. The cabriolet vehicle (1) according to Claim 9,
**characterised in that**
the shafts (A) have offset (22; 23) ends and run via a central part of their extension in the rear roof part in C-columns (7) which are situated to the side of a rear window (6).

11. The cabriolet vehicle (1) according to Claim 10,
**characterised in that**
the C-columns (7) are able to be pivoted in, in relation to the rear window (6), by means of the rotary movement of the shafts (A) around their rotary axes (10) during the opening of the roof, and can be fixed in the opened roof position between the roof parts (3; 4).

12. A moveable vehicle roof (2) for a cabriolet vehicle (1) according to one of Claims 1 to 11.

## Revendications

1. Véhicule cabriolet (1) comprenant au moins deux éléments de toit (3 ; 4) séparés l'un de l'autre par un joint (5) en position de fermeture du toit et consécutifs par rapport au sens de la marche (F), étant précisé que, pour l'ouverture de toit, un élément de toit (3) arrière peut être déplacé au moins substantiellement vers l'arrière et vers le bas et un élément de toit (4) disposé en amont de ce dernier peut être pivoté et approché contre l'élément de toit (3) arrière,
**caractérisé en ce que**,
pour la transmission du pivotement, il est prévu au moins un arbre (A) qui, lorsque le toit (2) est fermé, présente au moins une composante dans le sens de la marche (F) et une composante orientée vers le haut et dont le mouvement de rotation peut être transformé dans la zone du joint (5) entre les éléments de toit (3 ; 4) en un mouvement de pivotement entre ceux-ci.

2. Véhicule cabriolet (1) selon la revendication 1,
**caractérisé en ce que**,
l'arbre ou chaque arbre (A) est parallèle au plan d'extension de l'élément de toit (3) arrière.

3. Véhicule cabriolet (1) selon l'une des revendications 1 ou 2,
**caractérisé en ce que**,
pour la conversion du mouvement de rotation de l'arbre (A) en un mouvement de pivotement entre les éléments de toit (3 ; 4), il est prévu un engrenage (24) spatialement supérieur.

4. Véhicule cabriolet (1) selon l'une des revendications 1 à 3,
**caractérisé en ce que**,
pour l'entraînement du mouvement de rotation de l'arbre (A), il est prévu un engrenage (16) spatialement inférieur qui converti un mouvement de déplacement de l'élément de toit (3) arrière en un mouvement de rotation de l'arbre (A).

5. Véhicule cabriolet (1) selon l'une des revendications 1 à 4,
**caractérisé en ce que**,
pour son mouvement de déplacement, l'élément de toit (3) arrière peut pivoter autour d'un premier axe (11) disposé transversalement au véhicule (1), **en ce que** l'élément de toit (4) disposé en amont peut pivoter, par rapport à l'élément de toit (3) arrière, autour d'un deuxième axe (13) parallèle au premier axe (11) et **en ce que** l'arbre (A) couple les deux mouvements de rotation.

6. Véhicule cabriolet (1) selon l'une des revendications 1 à 5,
**caractérisé en ce que**,
pour le mouvement de l'élément de toit (3) arrière autour d'un premier axe (11) disposé transversalement au véhicule (1), pour le mouvement de l'élément de toit (4) disposé en amont autour d'un deuxième axe (13) et pour le mouvement de rotation de l'arbre (A), il est prévu un seul entraînement (15) qui permet d'effectuer le mouvement de l'élément de toit (3) arrière autour d'un premier axe (11) disposé transversalement au véhicule (1).

7. Véhicule cabriolet (1) selon l'une des revendications 5 ou 6,
**caractérisé en ce que**,
les engrenages (24 ; 16) spatialement supérieurs et/ou inférieurs sont respectivement conçus sous forme d'engrenages sphériques.

8. Véhicule cabriolet (1) selon la revendication 7,
**caractérisé en ce que**,
les engrenages (24 ; 16) spatialement supérieurs et/ou inférieurs comprennent au moins un joint universel.

9. Véhicule cabriolet (1) selon l'une des revendications 1 à 8,
**caractérisé en ce que**,
il est prévu des rapports de construction similaires des deux côtés du véhicule.

10. Véhicule cabriolet (1) selon la revendication 9,
**caractérisé en ce que**,
les arbres (A) présentent des extrémités coudées (22 ; 23) et s'étendent, sur une partie centrale de leur extension dans l'élément de toit arrière, dans des colonnes C (7) disposées sur les côtés d'une lunette arrière (6).

11. Véhicule cabriolet (1) selon la revendication 10,
**caractérisé en ce que**,
par le mouvement de rotation des arbres (A), les colonnes C (7) peuvent être pivotées autour de leur axe de rotation (10), lors de l'ouverture du toit, par rapport à la lunette arrière (6), et peuvent être maintenues entre les éléments de toit (3 ; 4) en position d'ouverture du toit.

12. Toit de véhicule (2) mobile pour un véhicule cabriolet (1) selon l'une des revendications 1 à 11.
